# DEMANDE DE BREVET EUROPEEN

(11) **EP 4 484 166 A2**
(43) Date de publication de la demande: **01.01.2025**
(21) Numéro de dépôt: 24213248.8
(22) Date de dépôt: 23.08.2018
(51) Int. Cl.: B33Y 70/10

(54) **ROBOT DE FABRICATION ADDITIVE DE STRUCTURES ARCHITECTURALES COLORÉES**

(30) Priorité: 08.09.2017 FR 1758302
(62) Demande divisionnaire de: 18788809.4
(71) Demandeur: Xtreee, 94623 Rungis Cedex (FR)
(72) Inventeur: ROUX, Philippe, 94623 Rungis Cedex (FR); MALLET, Alban, 94623 Rungis Cedex (FR); BOUYSSOU, Charles, 94623 Rungis Cedex (FR); AKHAVAN ZAKERI, Mahriz, 94623 Rungis Cedex (FR)
(74) Mandataire: Bringer IP

(57) **Abrégé**

L'invention concerne un robot de fabrication additive de structures architecturales comprenant : une tête d'extrusion (30) de cordons de matériau cimentaire comprenant une bouche d'entrée (31), une buse de sortie (34), et une enceinte de mélange (35); un circuit d'alimentation (20) en matériau cimentaire de ladite tête d'extrusion (30) comprenant un réservoir de stockage (10), une conduite (21) d'alimentation, et une pompe de gavage (22), caractérisé en ce qu'il comprend en outre un dispositif de colorisation (40) du matériau cimentaire présent dans ladite tête d'extrusion (30) comprenant au moins un réservoir de pigments de couleur (41a, 41b, 41c), au moins une conduite de colorisation (48a, 48b, 48c) débouchant dans ladite enceinte de mélange (35), chaque conduite de colorisation (48a, 48b, 48c) étant équipée de moyens de réglage de la quantité de pigments injectés dans ladite enceinte de mélange (35), de sorte qu'une commande coordonnée des moyens de réglage permet de définir une couleur du cordon de matériau cimentaire extrudé par ladite buse de sortie (34).

## Description

### 1. Domaine technique de l'invention

L'invention concerne la fabrication additive de matériaux cimentaires. L'invention concerne plus particulièrement un système d'extrusion de cordons de matériau cimentaire pour robot de fabrication additive de structures architecturales colorées. L'invention concerne également un robot équipé d'un tel système de fabrication additive de structures architecturales.

### 2. Arrière-plan technologique

L'impression 3D de matériaux cimentaires est une branche de la fabrication additive de matériaux cimentaires, dont les applications apparaissent nombreuses et prometteuses dans le domaine de l'architecture et de la construction.

En effet, l'impression 3D des matériaux cimentaires semble pouvoir apporter de nombreux avantages par rapport aux techniques traditionnelles parmi lesquels notamment la possibilité de pouvoir réaliser des formes complexes par ajout de couches successives de matériaux cimentaires, la rapidité des opérations de construction, la réduction des coûts et de la main d'oeuvre, une sécurité améliorée sur les chantiers, etc.

La maitrise de l'impression 3D de matériaux cimentaires fait appel à des compétences dans le domaine de la mécanique des fluides, la mécanique, l'électronique et le génie civil.

Dans tout le texte, les termes « structures architecturales » ou « pièces architecturales » désignent à la fois des éléments de construction individuels (pont, pilier, mur, mobilier urbain, etc.), des structures complètes (bâtiment, maison, immeuble, etc.) et des pièces architecturales diverses (oeuvres artistiques, sculptures, etc.).

L'extrusion de matériau cimentaire destinée à la fabrication d'une structure architecturale met en oeuvre une tête d'impression cimentaire comprenant une entrée de matériau cimentaire et une buse de sortie de matériau cimentaire, et un circuit d'alimentation de la tête d'impression en matériau cimentaire comprenant un réservoir de stockage de matériau cimentaire, une conduite reliant le réservoir de stockage et l'entrée de la tête d'impression, et une pompe de gavage de la conduite par le matériau cimentaire issu du réservoir de stockage.

L'une des limites actuelles de la fabrication additive de structures architecturales réside dans la difficulté de pouvoir produire des pièces colorées.

A ce jour, il existe deux solutions principales qui permettent de produire une pièce architecturale colorée.

La première solution consiste à fabriquer dans un premier temps une pièce architecturale par la mise en oeuvre d'un robot de fabrication additive, et à peindre dans un deuxième temps cette pièce architecturale fabriquée. En d'autres termes, l'opération de peinture intervient uniquement après la fabrication de la pièce, ce qui ralentit l'opération de production de la pièce et ajoute une étape supplémentaire. En outre, selon cette solution, seules les parties atteignables en surface de la structure architecturale peuvent être colorées.

La seconde solution consiste à utiliser un matériau cimentaire qui est coloré dans la masse avant utilisation. En d'autres termes, le réservoir de stockage du système d'extrusion est alimenté en un matériau cimentaire colorée. Un changement de couleur n'est alors possible que par un changement du contenu du réservoir. En pratique, cela peut se faire à chaque gâchée de matériau cimentaire déversée dans le réservoir de stockage. Il n'est donc pas possible avec une telle solution de produire des pièces qui présentent plusieurs variations rapides de couleur, sauf à compliquer les opérations de fabrication, en remplaçant régulièrement et pour chaque changement de couleur souhaité, le contenu du réservoir de stockage.

### 3. Objectifs de l'invention

Les inventeurs ont donc cherché à proposer un système d'extrusion de matériau cimentaire qui permet de résoudre au moins certains des inconvénients des solutions antérieures.

En particulier, l'invention vise à fournir un système d'extrusion qui permet de fabriquer des structures architecturales colorées sans rallonger les opérations de fabrication.

L'invention vise aussi à fournir, dans au moins un mode de réalisation, un système d'extrusion qui permet de fabriquer une structure architecturale qui présente une variation continue de couleur.

L'invention vise aussi à fournir, dans au moins un mode de réalisation, un système d'extrusion qui permet de fabriquer une structure architecturale qui est colorée non seulement en surface, mais également en profondeur.

L'invention vise aussi à fournir un robot équipé d'un système d'extrusion cimentaire selon l'invention.

### 4. Exposé de l'invention

Pour ce faire, l'invention concerne un robot de fabrication additive de structures architecturales comprenant un système de positionnement, tel qu'un bras articulé, piloté par une unité de commande, et un système d'extrusion comprenant une tête d'extrusion de cordons de matériau cimentaire comprenant une bouche d'entrée de matériau cimentaire, une buse de sortie configurée pour former des cordons de matériau cimentaire, une enceinte intermédiaire, dite enceinte de mélange, agencée entre ladite bouche d'entrée et ladite buse de sortie, ladite tête d'extrusion étant montée sur ledit système de positionnement de sorte que le déplacement du système de positionnement portant ladite tête d'extrusion selon une trajectoire prédéterminée permet la fabrication d'une structure architecturale par empilement de couches de cordons de matériau cimentaire extrudés par ladite tête d'extrusion.

Le robot selon l'invention est caractérisé en ce que ledit système d'extrusion comprend :
- un circuit d'alimentation en matériau cimentaire de ladite tête d'extrusion comprenant un réservoir de stockage de matériau cimentaire, une conduite d'alimentation en matériau cimentaire reliant ledit réservoir de stockage et ladite bouche d'entrée de ladite tête d'extrusion, et une pompe de gavage de ladite conduite d'alimentation en matériau cimentaire issu dudit réservoir de stockage,
- un dispositif de colorisation du matériau cimentaire présent dans ladite tête d'extrusion comprenant au moins un réservoir de pigments de couleur, au moins une conduite de colorisation reliant au moins un réservoir de pigments de couleur à ladite enceinte de mélange de ladite tête d'extrusion, chaque conduite de colorisation étant équipée de moyens de réglage de la quantité de pigments injectés dans ladite enceinte de mélange,
et en ce que ladite tête d'extrusion comprend un mélangeur dynamique configuré pour pouvoir mélanger, en amont de la buse de sortie, ledit matériau cimentaire et ledit(lesdits) pigment(s) fourni(s) par ledit dispositif de colorisation.

Un robot selon l'invention permet ainsi de colorer le matériau cimentaire directement dans la tête d'extrusion avant son extrusion. Le réservoir de stockage du circuit d'alimentation est alimenté en un matériau cimentaire de tous types, en particulier en un matériau cimentaire non coloré. En général, les matériaux cimentaires sont blancs ou gris selon leurs compositions. Ce matériau cimentaire est véhiculé vers la tête d'extrusion par l'intermédiaire de la conduite d'alimentation du circuit d'alimentation. La colorisation du matériau cimentaire intervient juste avant l'extrusion par l'injection de pigments de couleur dans l'enceinte de mélange qui est agencée entre la bouche d'entrée et la buse de sortie. En outre, la quantité de pigments injectés dans l'enceinte de mélange est contrôlée par des moyens de réglage agencés sur les conduites de colorisation, ce qui permet d'adapter la quantité de pigments à la couleur visée du cordon et à la couleur du matériau cimentaire versé dans le réservoir de stockage du circuit d'alimentation. L'invention permet donc de fournir des structures architecturales colorées, en particulier des dégradés de couleur par une commande adaptée des moyens de réglage.

En outre, ce n'est pas seulement la surface extérieure de la structure qui est colorée par un système selon l'invention, mais l'intégralité de la structure, ce qui permet ultérieurement de ménager des ouvertures dans la structure tout en obtenant des chants d'ouvertures colorés.

Un robot selon l'invention permet de colorer des structures architecturales, non seulement pour des raisons esthétiques, mais également pour définir des zones de la structure qui nécessitent un traitement postérieur spécifique. Par exemple, si la structure doit présenter des zones de découpe postérieures ou de zones d'ancrage d'équipements spécifiques, il est possible et aisé avec l'invention de colorer ces zones de découpe ou zones d'ancrage au cours de la fabrication de la pièce. Ces zones colorées sont ensuite aisément repérables par un opérateur pour effectuer les opérations correspondantes.

La couleur d'un cordon extrudé dépend de la commande des moyens de réglage et des pigments de couleur des réservoirs de pigments.

Avantageusement et selon l'invention, le dispositif de colorisation comprend au moins trois réservoirs de pigments de couleur, chaque réservoir étant alimenté par des pigments d'une couleur primaire distincte, de sorte qu'une commande cordonnée des moyens de réglage de la quantité de pigments injectés dans ladite enceinte de mélange par chaque conduite de colorisation de chaque réservoir de pigments permet d'obtenir un cordon de matériau cimentaire extrudé par ladite buse de sortie qui présente n'importe quelle couleur résultant de n'importe quelle combinaison des trois couleurs primaires.

Cette variante avantageuse permet d'obtenir des cordons, et par extension des structures architecturales, de n'importe quelle couleur obtenue par toute combinaison des trois couleurs primaires. La couleur obtenue dépend de la commande des moyens de réglage. Il est ainsi particulièrement aisé avec un système selon l'invention de produire des structures architecturales colorées et présentant au sein de la même structure n'importe quelle couleur.

Avantageusement et selon l'invention, lesdits pigments de couleur sont des pigments de couleur en solution aqueuse et lesdits moyens de réglage de la quantité de pigments injectés dans ladite enceinte de mélange comprennent une pompe doseuse configurée pour définir le débit de pigments injectés dans ladite enceinte de mélange.

Des pigments en solution aqueuse facilitent le mélange des pigments avec le matériau cimentaire. En outre, cela permet de recourir à des pompes doseuses pour régler la quantité de pigments injectés dans l'enceinte de mélange et pour véhiculer les pigments dans l'enceinte de mélange.

Avantageusement et selon cette variante, le système comprend une unité de commande desdites pompes doseuses.

Une telle unité de commande permet de contrôler les pompes doseuses et donc la couleur des cordons extrudés. Cette unité de commande est de préférence associée à une unité de commande des déplacements de la tête d'extrusion pour former la structure architecturale.

En variante ou en combinaison, chaque conduite de colorisation comprend une pompe de gavage de la pompe doseuse de cette conduite. Chaque pompe doseuse est par exemple formée d'un doseur volumétrique.

La pompe de gavage permet d'alimenter la pompe doseuse en pigments depuis le réservoir de pigments. Cette pompe de gavage est par exemple une pompe péristaltique, ce qui permet d'améliorer le pompage des pigments, en particulier dans le cas d'une distance importante, par exemple supérieure à 5 mètres, entre le réservoir de pigments et la pompe doseuse. Bien entendu, cette distance à partir de laquelle un doseur volumétrique est préférable dépend du type de doseur volumétrique, de la conduite de colorisation et de la différence de hauteur entre le réservoir de pigments et la pompe doseuse.

Avantageusement et selon l'invention, ladite enceinte de mélange s'étend selon une direction, dite direction longitudinale, et chaque conduite de colorisation débouche dans ladite enceinte de mélange par une aiguille qui s'étend selon une direction formant avec ladite direction longitudinale un angle compris entre 0 et 90°.

Selon cette variante, les pigments de couleur sont injectés dans le matériau cimentaire de l'enceinte de mélange suivant une direction qui forme avec la direction longitudinale, qui est la direction principale de l'enceinte de mélange, un angle prédéterminé. Cette direction principale de l'enceinte de mélange est aussi la direction du flux de matériau cimentaire dans l'enceinte de mélange vers la buse de sortie. L'injection de pigments de couleur suivant une direction prédéterminée permet d'obtenir un mélange homogène du matériau cimentaire et des pigments. Une injection des pigments suivant une direction à 90° de la direction principale de l'enceinte de mélange, c'est à dire une injection radiale des pigments dans le flux de matériau cimentaire favorise le mélange des pigments avec le matériau cimentaire circulant au voisinage de l'axe central de l'enceinte de mélange. Une injection suivant un angle proche de 0° favorise le mélange des pigments avec le matériau circulant au voisinage des parois de l'enceinte de mélange. Une adjuvantation à 45° est un bon compromis entre les deux angles précédemment décrits pour un mélange homogène.

L'invention permet d'utiliser différents angles pour différents pigments, par exemple pour favoriser une couleur à la périphérie des cordons et une autre au centre des cordons.

De préférence, les aiguilles sont agencées au voisinage de la partie amont de l'enceinte de mélange, c'est à dire à l'opposé de la buse de sortie. Chaque aiguille est en outre reliée au réservoir de pigments par l'intermédiaire d'un doseur volumétrique, ce qui permet de contrôler le débit de pigments injectés dans l'enceinte de mélange. Ainsi, le matériau cimentaire est conduit dans l'enceinte de mélange avec un débit constant, contrôlé par la pompe de gavage, qui est par exemple asservie en pression/débit, et les pigments sont conduits vers l'enceinte de mélange avec un débit constant contrôlé par les doseurs volumétriques. De préférence, chaque doseur volumétrique est relié à l'aiguille par l'intermédiaire d'un raccord de verrouillage du type Luer, plus connu sous la dénomination anglaise de « luer-lock ».

Selon l'invention, la tête d'extrusion comprend un mélangeur dynamique configuré pour pouvoir mélanger ledit matériau cimentaire et lesdits pigments fournis par ledit dispositif de colorisation dans ladite enceinte de mélange.

Selon l'invention, la tête d'impression comprend en outre, associée à l'enceinte de mélange, un mélangeur dynamique permettant de mélanger le matériau cimentaire et les pigments de manière homogène en amont de la buse de sortie. Le matériau cimentaire est conduit vers l'enceinte de mélange, depuis la bouche d'entrée, par exemple par l'intermédiaire une pompe de dosage à vis excentrée, ce qui permet de véhiculer le matériau vers l'enceinte à débit constant, sans générer de pulsations. En outre, cette pompe permet de réduire les éventuelles pulsations créées par la pompe de gavage.

Avantageusement et selon l'invention, le mélangeur dynamique comprend au moins un arbre s'étendant dans l'enceinte de mélange selon une direction, dite direction longitudinale, et portant des doigts radiaux répartis le long de l'arbre, et un moteur configuré pour pouvoir entrainer cet arbre en rotation de manière à pouvoir fournir un mélange homogène du matériau cimentaire et des pigments fournis par ledit dispositif de colorisation.

Un robot selon cette variante avantageuse permet d'obtenir un mélange homogène du matériau cimentaire et des pigments de couleur. La présence de doigts radiaux répartis le long de l'arbre du mélangeur permet de distribuer de manière égale les particules de matériau dans l'enceinte de mélange. Selon une variante, le mélangeur comprend deux bras parallèles, chaque bras comprenant des doigts radiaux, de manière à former un organe du type « batteur à oeufs ». Le moteur du mélangeur peut être commandé de manière à inverser son sens de rotation du/des axes pendant l'impression.

Avantageusement et selon l'invention, le système du robot comprend un capteur de pression dudit matériau cimentaire en amont de l'enceinte de mélange, dit capteur de sécurité, configuré pour mesurer le pression en amont de ladite enceinte de mélange de manière à pouvoir prévenir des risques de bouchage de l'enceinte de mélange ou de la buse de sortie.

Le robot selon l'invention comprend un système d'extrusion dont la tête d'impression est portée par un système de positionnement, tel qu'un bras articulé, lui-même piloté par un ordinateur.

Un robot selon l'invention permet donc de fabriquer des structures architecturales colorées.

### 5. Liste des figures

D'autres buts, caractéristiques et avantages de l'invention apparaîtront à la lecture de la description suivante donnée à titre uniquement non limitatif et qui se réfère aux figures annexées dans lesquelles :
- la figure 1 est une vue schématique fonctionnelle d'un système d'extrusion d'un robot selon un mode de réalisation de l'invention,
- la figure 2 est une vue schématique fonctionnelle d'un dispositif de colorisation d'un système d'extrusion d'un robot selon un mode de réalisation de l'invention,
- la figure 3 est une vue schématique fonctionnelle d'une tête d'impression d'un système d'extrusion d'un robot selon un mode de réalisation de l'invention,
- les figures 4a et 4b sont des vues schématiques partielles d'aiguilles d'un dispositif de colorisation qui débouchent dans une enceinte de mélange d'un système d'extrusion selon un mode de réalisation de l'invention,
- la figure 5 est une vue schématique en coupe d'une portion de l'enceinte de mélange d'un système d'extrusion d'un robot selon un mode de réalisation de l'invention,
- la figure 6 est une vue schématique d'un robot de fabrication additive selon un mode de réalisation de l'invention.

### 6. Description détaillée d'un mode de réalisation de l'invention

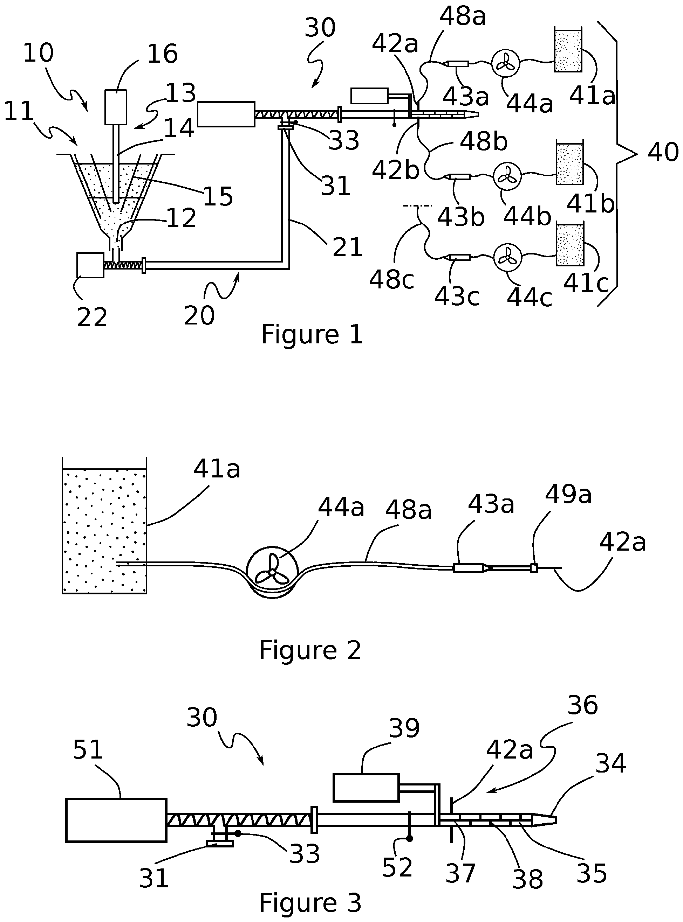

Sur les figures, les échelles et les proportions ne sont pas strictement respectées et ce, à des fins d'illustration et de clarté. Dans toute la description détaillée qui suit en référence aux figures, sauf indication contraire, chaque élément du système d'extrusion est décrit tel qu'il est agencé lorsque le système d'extrusion est dans la configuration de la figure 1.

En outre, les éléments identiques, similaires ou analogues sont désignés par les mêmes références dans toutes les figures.

Un système d'extrusion d'un robot selon le mode préférentiel de réalisation de l'invention, tel que représenté sur la figure 1, comprend un réservoir de stockage 10 de matériau cimentaire, une tête d'extrusion 30, un circuit 20 d'alimentation en matériau cimentaire de la tête d'impression agencé entre le réservoir de stockage 10 et la tête d'impression 30, et un dispositif de colorisation 40 relié à la tête d'extrusion 30.

Chacun des différents organes du système vont maintenant être décrits en détail.

### Réservoir de stockage

Le réservoir de stockage 10 est de préférence une trémie comprenant une ouverture supérieure 11 adaptée pour recevoir des gâchées de matériaux cimentaires et une sortie inférieure 12 reliée au circuit 20 d'alimentation. Le matériau cimentaire destiné à alimenter le réservoir de stockage est de préférence un matériau blanc pouvant être coloré par un dispositif de colorisation décrit ultérieurement. La trémie comprend en outre un agitateur 13 comprenant un arbre 14 portant une pluralité de pales latérales 15 par l'intermédiaire d'axes perpendiculaires à l'arbre 14, et un moteur 16 de mise en rotation de l'arbre 14. Le moteur 14 est par exemple un moteur électrique configuré pour pouvoir entrainer à faible vitesse, par exemple à une vitesse de 6 tours/minute, l'arbre 14 de l'agitateur 13. L'utilisation d'un moteur thermique est bien sûr possible sans modifier les performances du système d'extrusion selon l'invention. Le rôle de l'agitateur est de pouvoir maintenir le matériau cimentaire dans la trémie à un état rhéologique quasi-constant avant d'être conduit vers la tête d'impression par le circuit 20 d'alimentation.

Le matériau cimentaire utilisé est par exemple un prémix blanc à base de ciment avec des particules fines, hydraté et fluidifié.

### Circuit d'alimentation

Le circuit d'alimentation 20 relie le réservoir de stockage 10 à la tête d'extrusion 30. Ce circuit comprend une conduite 21 reliant la sortie 12 du réservoir de stockage 10 à une bouche d'entrée 31 de la tête d'extrusion 30. Le circuit d'alimentation 20 comprend en outre une pompe de gavage 22. Cette pompe de gavage 22 est par exemple asservie en pression/débit par un capteur de pression 33 agencé au voisinage de la bouche d'entrée 31 de la tête d'extrusion 30. Cette pompe de gavage 22 est par exemple une pompe à vis excentrée de manière à pouvoir véhiculer le matériau cimentaire vers la tête d'extrusion 30 en minimisant les pulsations. Cette pompe de gavage 22 est par exemple une pompe commercialisée sous les références Putzmeister^{®} FP-V Mono. Bien entendu, d'autres pompes peuvent être utilisées sans modifier les performances de l'invention. Le capteur 23 de pression/débit peut-être de tous types connus. Il s'agit par exemple d'un capteur commercialisé sous la référence ifm^{®} PF2953. Bien entendu, d'autres capteurs peuvent être utilisés sans modifier les performances de l'invention. La pompe de gavage 22 est configurée pour suivre une loi d'asservissement prédéterminée et paramétrable par un opérateur en fonction des besoins. Par exemple, la loi d'asservissement est paramétrée pour maintenir la pression du matériau cimentaire entre 2 et 6 bars.

### Tête d'extrusion

La tête d'extrusion 30 comprend, tel que représenté sur la figure 3, une bouche d'entrée 31 reliée au circuit d'alimentation 20 et une buse 34 de sortie configurée pour former des cordons de matériau cimentaire.

La tête d'extrusion comprend en outre une enceinte de mélange 35 agencée en amont de la buse 34 de sortie et dans laquelle débouche le dispositif de colorisation 40, décrit ci-après. L'enceinte de mélange 35 est équipée d'un mélangeur dynamique 36 adapté pour pouvoir mélanger le matériau cimentaire et les pigments colorés fournis par le dispositif de colorisation 40.

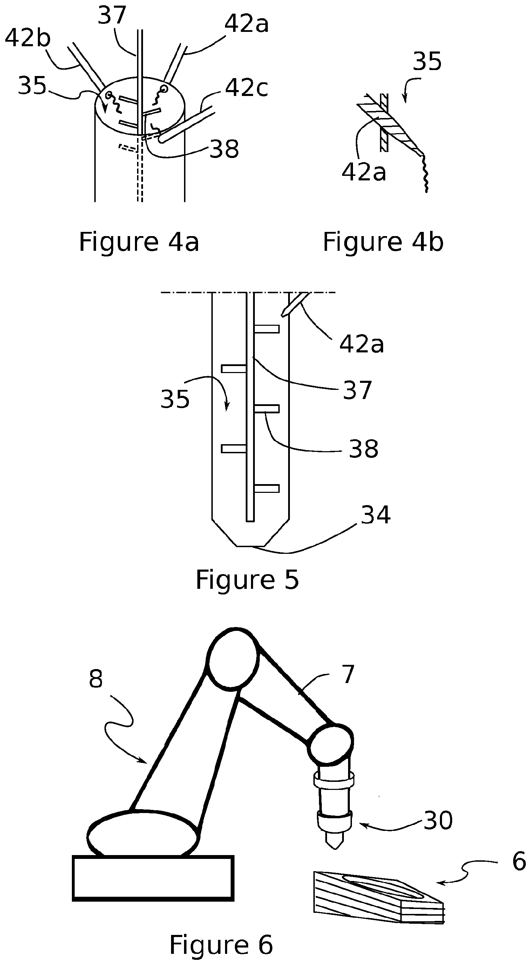

Le mélangeur dynamique 36 comprend, tel que représenté partiellement sur les figures 4a et 5, un arbre 37 s'étendant longitudinalement dans l'enceinte de mélange 35 sur lequel sont montés des doigts radiaux 38 répartis le long de l'arbre 37. Le mélangeur dynamique 36 comprend également un moteur 39 configuré pour pouvoir entrainer l'arbre 37 en rotation de manière à pouvoir fournir un mélange homogène du matériau cimentaire et de pigments de couleur. Ce moteur 39 peut être un moteur électrique, un moteur thermique, et de manière générale tous types de moteurs. Selon le mode de réalisation des figures, le moteur 39 est déporté par rapport à l'arbre 37 pour limiter au maximum la perturbation du mélange dans l'enceinte de mélange 35.

La tête d'extrusion 30 comprend également une pompe de dosage 51 à vis excentrée configurée pour pouvoir véhiculer le matériau cimentaire de la bouche d'entrée 31 vers l'enceinte de mélange 35. Une telle pompe de dosage est par exemple une pompe commercialisée sous les références Viscotec^{®} 3VMP36. Bien entendu, d'autres pompes peuvent être utilisées sans modifier les performances de l'invention.

Selon un autre mode de réalisation non représenté sur les figures, la pompe de dosage 51 est remplacée par un doseur volumétrique configuré pour pouvoir assurer un débit constant sur une plage prédéterminée de fonctionnement.

La tête d'extrusion 30 comprend également un capteur de pression 52 de sécurité agencé en amont de l'enceinte de mélange 35. Ce capteur est par exemple un capteur commercialisé sous les références ifm^{®} PF2953. Bien entendu, d'autres capteurs peuvent être utilisés sans modifier les performances de l'invention. Ce capteur 52 de sécurité permet de mesurer le pression en amont de l'enceinte de mélange 35 de manière à pouvoir prévenir des risques de bouchage de l'enceinte de mélange 35 ou de la buse de sortie 34. Ce capteur peut par exemple être relié à un système d'arrêt automatique du système d'extrusion dès qu'un seuil de pression est atteint.

La buse de sortie 34 de la tête d'extrusion est de préférence démontable de manière à pouvoir adapter la forme de la buse de sortie 34 à la pièce à fabriquer. En particulier, la section de la buse de sortie 34 peut être adaptée à chaque type de pièce fabriquée, voir changée en cours d'impression pour modifier la section des cordons de certaines zones de la pièce fabriquée. Pour ce faire, la buse de sortie comprend par exemple une paroi externe filetée qui coopère avec une portion interne filetée de la paroi de la tête d'extrusion délimitant l'enceinte de mélange 35. Selon une autre variante, la buse de sortie comprend une paroi interne filetée qui coopère avec une portion externe filetée de la paroi de la tête d'extrusion.

### Dispositif de colorisation

Le dispositif de colorisation 40, comprend tel que représenté sur la figure 1, des réservoirs 41a, 41b, 41c de pigments de couleur. Ces réservoirs 41a, 41b, 41c contiennent de préférence chacun des pigments d'une des trois couleurs primaires de sorte que le dispositif peut fournir une combinaison de pigments permettant de conférer aux cordons extrudés n'importe quelle couleur par la combinaison des trois couleurs primaires. Les pigments sont de préférence des pigments en solution aqueuse.

Dans la suite, le principe de l'injection des pigments issus du réservoir 41a est expliqué en lien avec la figure 2, étant entendu que l'injection des pigments issus des autres réservoirs 41b, 41c suit le même principe.

Ainsi et tel que représenté schématiquement sur la figure 2, le réservoir 41a est relié à l'enceinte de mélange 35 de la tête d'extrusion par une conduite 48a de colorisation. Cette conduite 48a débouche dans l'enceinte de mélange 35 par l'intermédiaire d'une aiguille 42a. La conduite 48a comprend en outre un doseur volumétrique 43a et une pompe péristaltique 44a. La doseur volumétrique est par exemple un doseur commercialisé sous la référence Viscotec^{®} eco-PEN600. Bien entendu, un autre doseur peut être utilisé sans modifier les performances de l'invention. L'aiguille 42a débouche dans l'enceinte de mélange 35, à l'opposée de la buse de sortie 34, suivant une direction qui forme par exemple un angle de 45° avec la direction principale de l'enceinte de mélange, tel que représenté schématiquement sur la figure 4b.

L'injection de pigments de couleur dans l'enceinte de mélange 35 est donc réalisée par l'intermédiaire d'un doseur volumétrique 43a qui permet de régler la quantité de pigments injectés dans l'enceinte de mélange. Les pigments sont pompés sous forme liquide dans le réservoir 41a et conduits à une pression constante dans l'enceinte de mélange 35. Le doseur volumétrique 43a est relié à une aiguille 42a par l'intermédiaire d'un dispositif du type luer-lock 49a.

Le doseur volumétrique 43a forme des moyens de réglage de la quantité de pigments injectés dans l'enceinte de mélange 35.

Ainsi, la commande coordonnées des doseurs volumétriques 43a, 43b, 43d des trois réservoirs de pigments permet de définir, à chaque instant, la couleur du cordon de matériau cimentaire extrudé par la buse de sortie 34.

Ces doseurs volumétriques 43a, 43b, 43c sont de préférence commandées par une unité de commande non représentée sur les figures. Une telle unité de commande permet de commander le débit de pigments issu de chaque réservoir vers l'enceinte de mélange pour pouvoir obtenir à chaque instant un cordon de la couleur visé.

Le dispositif de colorisation 40 permet donc d'injecter des pigments de couleur directement dans l'enceinte de mélange, juste avant l'extrusion du cordon de matériau cimentaire par la buse de sortie. Cette injection de pigments dans l'enceinte de mélange permet donc de conférer aux cordons extrudés une teinte colorée avant extrusion.

L'invention a été décrite avec des pigments sous forme aqueuse. Selon un autre mode de réalisation, les pigments sont fournis sous forme de poudre et sont véhiculés vers l'enceinte de mélange par des vis sans fin du type vis d'Archimède, qui remplacent alors les doseurs volumétriques.

La figure 6 représente schématiquement un robot 8 de fabrication additive de structures architecturales 6 comprenant un système de positionnement de la tête d'impression, qui est par exemple un bras articulé 7 piloté par une unité de commande non représentée sur la figure 6. Le robot 8 comprend un système d'extrusion de matériau cimentaire selon l'invention et est configuré pour déplacer la tête d'extrusion 30 du système d'extrusion. Pour ce faire, le bras articulé 7 du robot 8 porte la tête d'extrusion 30 telle que décrite en lien avec la figure 3. Sur la figure 6, le circuit d'alimentation de la tête en matériau cimentaire et le dispositif de colorisation ne sont pas représentés à des fins de clarté. Cela étant, la tête d'extrusion 30 est bien évidemment alimentée en matériau cimentaire par un circuit d'alimentation tel que décrit en lien avec la figure 1 et la pièce architecturale 6 produite par le robot 8 peut être colorée par un dispositif de colorisation tel que décrit en lien avec les figures 1 et 2 et relié directement à la tête d'extrusion 30.

Selon un autre mode de réalisation non représenté, le robot peut être un robot six axes, monté sur rails ou non, sur portique ou non. Le robot peut également être un robot à câbles ou tous types de robots dont le système de positionnement, tel qu'un bras articulé, peut être piloté par ordinateur.

Un robot selon l'invention peut être utilisé pour fabriquer tous types de pièces architecturales. Une telle pièce architecturale peut être une pièce de renfort, un bâtiment, et de manière générale, toute pièce en matériau cimentaire. Les pièces architecturales fabriquées par l'utilisation d'un système d'extrusion selon l'invention peuvent être d'échelles variées. Il peut s'agir d'une portion de poteau, d'un poteau entier, d'un mur, d'un élément de dalle, d'un bâtiment, d'un mobilier urbain, d'une sculpture, etc.

## Revendications

1. Robot de fabrication additive de structures architecturales comprenant un système de positionnement, tel qu'un bras articulé (7), piloté par une unité de commande, et un système d'extrusion comprenant une tête d'extrusion (30) de cordons de matériau cimentaire comprenant une bouche d'entrée (31) de matériau cimentaire, une buse de sortie (34) configurée pour former des cordons de matériau cimentaire, une enceinte intermédiaire, dite enceinte de mélange (35), agencée entre ladite bouche d'entrée (31) et ladite buse de sortie (34), ladite tête d'extrusion étant montée sur ledit système de positionnement de sorte que le déplacement du système de positionnement portant ladite tête d'extrusion (30) selon une trajectoire prédéterminée permet la fabrication d'une structure architecturale (6) par empilement de couches de cordons de matériau cimentaire extrudés par ladite tête d'extrusion (30),
ledit robot étant **caractérisé en ce que** ledit système d'extrusion comprend :
- un circuit d'alimentation (20) en matériau cimentaire de ladite tête d'extrusion (30) comprenant un réservoir de stockage (10) de matériau cimentaire, une conduite (21) d'alimentation en matériau cimentaire reliant ledit réservoir de stockage (10) et ladite bouche d'entrée (31) de ladite tête d'extrusion (30), et une pompe de gavage (22) de ladite conduite (21) d'alimentation en matériau cimentaire issu dudit réservoir de stockage (10),
- un dispositif de colorisation (40) du matériau cimentaire présent dans ladite tête d'extrusion (30) comprenant au moins un réservoir de pigments de couleur (41a, 41b, 41c), au moins une conduite de colorisation (48a, 48b, 48c) reliant au moins un réservoir de pigments de couleur (41a, 41b, 41c) à ladite enceinte de mélange (35) de ladite tête d'extrusion, chaque conduite de colorisation (48a, 48b, 48c) étant équipée de moyens de réglage de la quantité de pigments injectés dans ladite enceinte de mélange (35),
et **en ce que** ladite tête d'extrusion comprend un mélangeur dynamique (36) configuré pour pouvoir mélanger, en amont de la buse de sortie, ledit matériau cimentaire et ledit(lesdits) pigment(s) fourni(s) par ledit dispositif de colorisation (40).

2. Robot selon la revendication 1, **caractérisé en ce que** ledit dispositif de colorisation (40) comprend au moins trois réservoirs de pigments de couleur (41a, 41b, 41c), chaque réservoir étant alimenté par des pigments d'une couleur primaire distincte, de sorte qu'une commande cordonnée des moyens de réglage de la quantité de pigments injectés dans ladite enceinte de mélange (35) par chaque conduite de colorisation de chaque réservoir de pigments permet d'obtenir un cordon de matériau cimentaire extrudé par ladite buse de sortie (34) qui présente n'importe quelle couleur résultant de n'importe quelle combinaison des trois couleurs primaires.

3. Robot selon l'une des revendications 1 ou 2, **caractérisé en ce que** lesdits pigments de couleur sont des pigments de couleur en solution aqueuse et **en ce que** lesdits moyens de réglage de la quantité de pigments injectés dans ladite enceinte de mélange comprennent une pompe doseuse (43a, 43b, 43c) configurée pour définir le débit de pigments injectés dans ladite enceinte de mélange (35).

4. Robot selon la revendication 3, **caractérisé en ce qu'**il comprend une unité de commande desdites pompes doseuses (43a, 43b, 43c).

5. Robot selon l'une des revendications 3 ou 4, **caractérisé en ce que** chaque conduite de colorisation (48a, 48b, 48c) comprend une pompe de gavage (44a, 44b, 44c) de la pompe doseuse (43a, 43b, 43c) de cette conduite de colorisation (48a, 48b, 48c).

6. Robot selon l'une des revendications 3 à 5, **caractérisé en ce que** chaque pompe doseuse (43a, 43b, 43c) est formée d'un doseur volumétrique.

7. Robot selon l'une des revendications 1 à 6, **caractérisé en ce que** ladite enceinte de mélange (35) s'étend selon une direction, dite direction longitudinale, et **en ce que** chaque conduite de colorisation (48a, 48b, 48c) débouche dans ladite enceinte de mélange (35) par une aiguille (42a, 42c, 42c) qui s'étend selon une direction formant avec ladite direction longitudinale un angle compris entre 0 et 90°.

8. Robot d'extrusion selon l'une des revendications 1 à 7, **caractérisé en ce que** ledit mélangeur dynamique (36) comprend au moins un arbre (37) s'étendant dans l'enceinte de mélange (35) selon une direction, dite direction longitudinale, et portant des doigts radiaux (38) répartis le long de l'arbre (37), et un moteur (39) configuré pour pouvoir entrainer cet arbre (37) en rotation de manière à pouvoir fournir un mélange homogène du matériau cimentaire et des pigments fournis par ledit dispositif de colorisation.

9. Robot d'extrusion selon l'une des revendications 1 à 8, **caractérisé en ce qu'**il comprend un capteur de pression dudit matériau cimentaire en amont de l'enceinte de mélange, dit capteur de sécurité (52), configuré pour mesurer la pression en amont de ladite enceinte de mélange (35) de manière à pouvoir prévenir des risques de bouchage de l'enceinte de mélange (35) ou de la buse de sortie (34).
